# EUROPÄISCHE PATENTANMELDUNG

(11) **EP 2 790 295 A1**
(43) Veröffentlichungstag der Anmeldung: **15.10.2014**
(21) Anmeldenummer: 13163340.6
(22) Anmeldetag: 11.04.2013
(51) Int. Cl.: H02K 1/24, H02K 15/12, H02K 15/02

(54) **Rotor für einen Reluktanzmotor, Verfahren zum Herstellen eines Rotors für einen Reluktanzmotor sowie elektrische Maschine, insbesondere ein Reluktanzmotor**

(71) Anmelder: Siemens Aktiengesellschaft, 80333 München (DE)
(72) Erfinder: Brandl, Konrad, 93107 Thalmassing (DE); Grillenberger, Reiner, 91575 Windsbach (DE)

(57) **Zusammenfassung**

Rotor für einen Reluktanzmotor, Verfahren zum Herstellen eines Rotors für einen Reluktanzmotor sowie elektrische Maschine, insbesondere ein Reluktanzmotor
Ein Rotor (12) weist mehrere, entlang einer Drehachse (D) hintereinander gestapelte Rotorbleche (2) auf, wobei
- jedes Rotorblech (2) mehrere magnetische Lamellen (4) aufweist, die voneinander durch unmagnetische Ausnehmungen (6) getrennt sind,
- die unmagnetischen Ausnehmungen (6) bogenartig ausgebildet sind und ihre beiden Enden (7) zu einem äußeren Umfang (U) des Rotorblechs (2) hin offen sind,
- die Ausnehmungen (6) zumindest eines Teils der Rotorbleche (2) mit einem festen Werkstoff (16) ausgefüllt sind.

Im Hinblick auf einen einfachen Aufbau bei einer verbesserten Funktionalität des Rotors (12) sind im zusammengebauten Zustand des Rotors (12) die gestapelten Rotorbleche (2) lediglich in Richtung der Drehachse (D) miteinander verbunden.

## Beschreibung

Die Erfindung betrifft einen Rotor für einen Reluktanzmotor, umfassend mehrere entlang einer Drehachse hintereinander gestapelte Rotorbleche, wobei jedes Rotorblech mehrere magnetische Lamellen aufweist, die voneinander durch unmagnetische Ausnehmungen getrennt sind, wobei die unmagnetischen Ausnehmungen bogenartig sind und ihre beiden Enden zu einem äußeren Umfang des Rotorblechs hin offen sind und wobei die Ausnehmungen mit einem festen Werkstoff ausgefüllt sind.

Die Erfindung betrifft weiterhin ein Verfahren zum Herstellen eines solchen Rotors für einen Reluktanzmotor.

Die Erfindung betrifft zudem eine elektrische Maschine, insbesondere einen Reluktanzmotor.

Eine elektrische Maschine ist eine Vorrichtung, die elektrische Energie in mechanische Energie, insbesondere Bewegungsenergie (Motorbetrieb) und/oder mechanische Energie in elektrische Energie (Generatorbetrieb) umformt. Eine rotierende elektrische Maschine ist eine elektrische Maschine, bei der ein Ständer eine in der Regel kreisförmige Öffnung bereitstellt, in der ein Läufer drehbar gelagert angeordnet ist. Der Ständer ist gegenüber dem Läufer drehfest angeordnet. Der Ständer und der Läufer sind mittels eines magnetischen Flusses verkettet, wodurch im Motorbetrieb eine Kraftwirkung erzeugt wird, die den Läufer gegenüber dem Ständer drehend antreibt und im Generatorbetrieb dem Läufer zugeführte mechanische Energie in elektrische Energie umwandelt.

Ein Rotor für einen Reluktanzmotor ist aus der US 5,818,140 A bekannt. Darin ist ein Rotor beschrieben, dessen Blechpaket aus Rotorblechen besteht, die jeweils Ausstanzungen aufweisen. Dieser Rotor ist hier auch als Vagati-Rotor bezeichnet. Durch die Ausstanzungen ergeben sich geschwungene, streifenförmige Blechabschnitte, die als Flussleitabschnitte dienen und den magnetischen Fluss in der für die Bereitstellung der nötigen Reluktanz des Rotors nötigen Weise führen. Zwischen den einzelnen Flussleitabschnitten befindet sich durch die Ausstanzungen Luft, d.h. ein unmagnetischer Bereich, der als magnetische Flusssperre wirkt. Durch die streifenförmigen Flussleitabschnitte ergibt sich eine hohe Drehmomentausbeute.

Die Leistungsfähigkeit eines derartigen Rotors hängt entscheidend von der Ausbildung der Bereiche mit hoher magnetischer Leitfähigkeit ab, die weiterhin als Lamellen bezeichnet werden. Diese Bereiche sind um eine oder mehrere Achse(n) mit hoher magnetischer Leitfähigkeit (d-Achse) angeordnet und wechseln sich in Umfangsrichtung mit Bereichen niedrigerer magnetischer Leitfähigkeit ab, die um eine oder mehrere Achse(n) mit niedrigerer magnetischer Leitfähigkeit (q-Achse) angeordnet sind. Um diese unterschiedlichen magnetischen Leitfähigkeiten innerhalb des Rotors zu erreichen, sind die Rotorbleche beispielsweise mit ausgestanzten Ausnehmungen versehen. Hierzu gibt es die unterschiedlichsten Ausführungsformen.

Für eine möglichst hohe Drehmomentausbeute werden die Rotorbleche so dimensioniert, dass eine Ersatzschaltbild-Reaktanz in Richtung der q-Achse möglichst klein ist. In Richtung der q-Achse sind deshalb üblicherweise viele und/oder großflächige Ausstanzungen im Rotorblech vorgesehen. Dies führt aber zu einer Schwächung der mechanischen Stabilität, so dass die Drehzahl begrenzt ist. Im Hinblick auf eine Verbesserung der mechanischen Stabilität weisen die Rotorbleche einen umlaufenden Außenring. Derartige Rotorbleche sind z.B. aus der JP 2001238418 A zu entnehmen. Darüber hinaus sind die Ausnehmungen oder Ausstanzungen etwa mittig durch einen Steg unterbrochen, der in radialer Richtung zwei magnetische Lamellen des Rotorblechs miteinander verbindet.

In der EP 0 621 677 A2 ist eine weitere Rotoranordnung für einen Reluktanzmotor beschrieben, die keinen Außenring aufweisen. Die Innenräume sind mit Glasfasern und einem wärmegehärteten Epoxid ausgefüllt. Die Rotoranordnung weist an beiden Enden je eine Endkappe auf. Um die mechanische Stabilität der Rotoranordnung zu erhöhen, sind vier Stege (rotor bars) vorgesehen, die sich im Umfangbereich der Rotorbleche zwischen den Endscheiben erstrecken. Je zwei gegenüberliegende Stege sind zudem über sich in radiale Richtung erstreckende Schrauben miteinander verbunden, so dass einzelne Rotorbleche, durch welche die Schrauben verlaufen, eine zusätzliche, diametral verlaufende Bohrung (receiving bore) aufweisen. Es ist somit ein aufwändiges Befestigungssystem erforderlich, welche mehrere Befestigungselemente in Axial- und Radialrichtung umfasst, um die Rotoranordnung zusammenzuhalten.

Die Aufgabe der Erfindung besteht deshalb darin, einen Rotor der eingangs genannten Art anzugeben, der einen einfachen Aufbau bei einer verbesserten Funktionalität aufweist.

Diese Aufgabe wird gelöst durch die Merkmale des unabhängigen Patentanspruchs 1. Der erfindungsgemäße Rotor weist mehrere, entlang einer Drehachse hintereinander gestapelte Rotorbleche auf, wobei
- jedes Rotorblech mehrere magnetische Lamellen aufweist, die voneinander durch unmagnetische Ausnehmungen getrennt sind,
- die unmagnetischen Ausnehmungen bogenartig ausgebildet sind und ihre beiden Enden zu einem äußeren Umfang des Rotorblechs hin offen sind,
- die Ausnehmungen zumindest eines Teils der Rotorbleche mit einem festen Werkstoff, insbesondere ein Kunststoff, ausgefüllt sind, und
- wobei im zusammengebauten Zustand des Rotors die gestapelten Rotorbleche lediglich in Richtung der Drehachse miteinander verbunden sind.

Die Aufgabe wird weiterhin erfindungsgemäß gelöst durch ein Verfahren zum Herstellen eines Rotors für einen Reluktanzmotor, wobei
- mehrere Rotorbleche, umfassend innerhalb eines Außenrings angeordnete magnetische Lamellen, die voneinander durch unmagnetische, bogenartige Ausnehmungen getrennt sind, gefertigt werden,
- die Rotorbleche entlang einer Drehachse hintereinander gestapelt werden,
- die Außenringe der einzelnen Rotorbleche entfernt werden und hierdurch beide Enden der bogenartigen Ausnehmungen in den äußeren Umfang der Rotorbleche münden,
- die Ausnehmungen zumindest eines Teils der Rotorbleche mit einem flüssigen Werkstoff ausgefüllt werden, der verfestigt wird.

Die Aufgabe wird weiterhin erfindungsgemäß gelöst durch eine elektrische Maschine, insbesondere ein Reluktanzmotor, mit einem Stator und einem solchen Rotor.

Die in Bezug auf den Rotor nachstehend angeführten Vorteile und bevorzugten Ausgestaltungen lassen sich sinngemäß auf das Verfahren zum Herstellen eines Rotors sowie auf die elektrische Maschine mit einem derartigen Rotor übertragen.

Die vorliegende Erfindung geht von der Überlegung aus, dass durch einen Aufbau des Rotors, der eine ausreichende mechanische Stabilität aufweist, sowohl auf die Außenringe der Rotorbleche als auch auf weitere Befestigungselemente im Umfangbereich der Rotorbleche, verzichtet werden kann. Durch unterschiedliche Magnetisierungszustände haben die Außenringe schwankende Sättigungszustände, die sich wiederum ungünstig auf das Betriebsverhalten des Reluktanzmotors auswirken. Durch den Wegfall der Außenringe wird somit das Betriebsverhalten des Reluktanzmotors verbessert. Da auch keine zusätzlichen Befestigungselemente im Umfangbereich der Rotorbleche vorgesehen sind, ist die Fertigung eines Reluktanzmotors viel einfacher als z.B. gemäß EP 0 621 677 A2.

Dabei basiert die vorliegende Erfindung auf der Erkenntnis, dass ein mechanisch stabiler Verband der Rotorbleche realisiert wird, indem die Rotorbleche lediglich in Richtung der Drehachse, d.h. in Längs- oder Axialrichtung des Rotors, miteinander verbunden sind. Hierbei ist keine Verbindung um den Umfang der Rotorbleche vorgesehen d.h. dass keine Störung des magnetischen Flusses sowie kein komplizierter Aufbau, beispielsweise mit sich in Radialrichtung erstreckenden Schrauben, vorliegen. Ein weiterer Vorteil eines solchen Rotors ist, dass alle Rotorbleche identisch ausgebildet sind (keines der Bleche ist mit Bohrungen bzw. Unterbrechungen für Befestigungsmittel in Radialrichtung versehen), so dass der Rotor besonders einfach hergestellt wird.

Eine ausreichende Stabilität eines derartigen Rotors wird gewährleistet, indem die Rotorbleche zusammengepresst sind und zudem in die Ausnehmungen und Innenräume ein verfestigter Werkstoff eingespritzt wird, der eine niedrige magnetische Permeabilität (insbesondere eine magnetische Permeabilität etwa gleich 1) aufweist und der den magnetischen Fluss nicht beeinflusst und gleichzeitig nach seiner Verfestigung die magnetischen Lamellen der Rotorbleche zusammenhält. Der Werkstoff füllt dabei insbesondere alle Ausnehmungen und Innenräume über die Länge des Rotors in Richtung der Drehachse aus. Möglich ist jedoch auch, dass der Werkstoff sich lediglich über einen Teil des Rotors erstreckt.

Unter "magnetischen Lamellen" werden hierbei Bereiche des Rotorblechs mit einer hohen relativen magnetischen Permeabilität µᵣ>>1, insbesondere mit einer relativen Permeabilität µᵣ≈1000, verstanden.

Mit "unmagnetischen Bereichen" werden Ausnehmungen wie Ausstanzungen im Material des Rotorblechs bezeichnet, die eine niedrige relativen magnetische Permeabilität µᵣ haben, insbesondere µᵣ≈1, d.h. sie sind magnetisch neutral. Diese Bereiche bleiben bei einer geeigneten Wahl des Werkstoffs (insbesondere eines Kunststoffs) mit dem sie im zusammengebauten Zustand des Rotors ausgefüllt sind, ebenfalls magnetisch neutral.

Bevorzugt wird die Funktionalität des Rotors weiterhin verbessert, indem die Ausnehmungen über ihre Länge zwischen den beiden in den Umfang des Rotorblechs mündenden Enden durchgehend sind. Hierbei sind keine radialen Stege zwischen den Lamellen eines Rotorblechs vorgesehen, d.h. die Ausnehmungen sind entlang ihrer gesamten Länge zwischen den beiden in den Umfang des Rotorblechs mündenden Enden ununterbrochen. Die Lamellen eines Rotorblechs sind somit lose gegeneinander, jedoch gewährleistet der verfestigte Werkstoff zwischen den Lamellen eine ausreichende Festigkeit, damit sich die Lamellen nicht gegeneinander verschieben.

Vorzugsweise weisen die magnetischen Lamellen Verbindungselemente auf, über welche sie in einer formschlüssigen Verbindung mit dem Werkstoff stehen. Die Verbindungselemente sorgen für eine zusätzliche Stabilität des Rotors, so dass die Lamellen und der Werkstoff aufgrund des Formschlusses sicherer miteinander verbunden sind.

Gemäß einer bevorzugten Ausgestaltung sind die Verbindungselemente um den Umfang der magnetischen Lamellen angeordnet, so dass eine Wirkung zwischen den Lamellen und dem Werkstoff in radialer Richtung in der Rotorblechebene erzielt ist. Als besonders vorteilhaft hat sich hierbei eine Schwalbenschwanz-Verbindung herausgestellt. Um eine Schwalbenschwanz-Verbindung herzustellen, sind die Verbindungselemente somit bevorzugt als trapezförmige Zähne und/oder trapezförmige Einkerbungen am Rand der Lamellen ausgebildet. Der noch flüssige Werkstoff füllt dabei die Hinterschneidungen der Schwalbenschwanz-Verbindungelemente aus und bewirkt eine Verzahnung des Werkstoffs und der Verbindungselemente untereinander. Es sind hierbei auch weitere geometrische Ausgestaltungen der Verbindungselemente sowie weitere formschlüssige Verbindungsarten ebenfalls denkbar.

Gemäß einer weiteren, bevorzugten Ausgestaltung wird die Verbindung zwischen den einzelnen Rotorblechen verstärkt, indem die Verbindungselemente als Bohrungen in den Lamellen ausgebildet sind. Bei mehreren übereinander gestapelten Rotorblechen entstehen somit im Bereich der Bohrungen Kanäle, die mit dem verfestigten Werkstoff ausgefüllt sind.

Vorteilhafterweise sind zudem Endscheiben vorgesehen, welche die Rotorbleche zusammenhalten. Die Endscheiben üben eine axiale Druckkraft auf das Blechpaket aus, indem mindestens eine der Endscheiben an der Welle, auf der die Rotorbleche angeordnet sind, befestigt ist, beispielsweise über Sicherheitsringe oder eine Schweißverbindung mit der Welle. Es entsteht somit zwischen den beiden Endscheiben ein Presssitz für das Blechpaket.

Ausführungsbeispiele der Erfindung werden anhand einer Zeichnung näher erläutert. Hierhin zeigen:
- FIG 1: eine Vordersicht auf ein Rotorblech ohne einen Außenring,
- FIG 2: eine Vordersicht auf eine Hälfte eines Rotorblechs mit schwalbenschwanzförmigen Verbindungselementen an den Lamellen,
- FIG 3: eine Vordersicht auf eine Hälfte eines Rotorblechs, welches Bohrungen in den Lamellen aufweist,
- FIG 4: ein Zusammenhalten des Rotors durch Endscheiben,
- FIG 5: einen Schnitt durch die Ebene V-V gemäß FIG 4,
- FIG 6: einen Schnitt durch die Ebene VI-VI gemäß FIG 4, und
- FIG 7: einen Schnitt in Axialrichtung durch einen Reluktanzmotor.

Gleiche Bezugszeichen haben in den Figuren die gleiche Bedeutung.

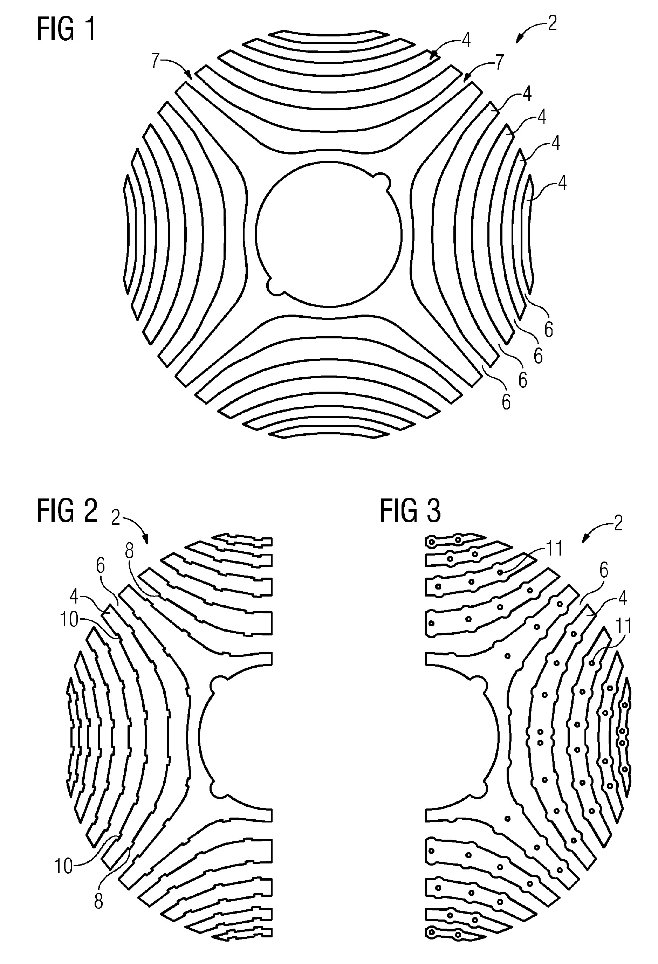

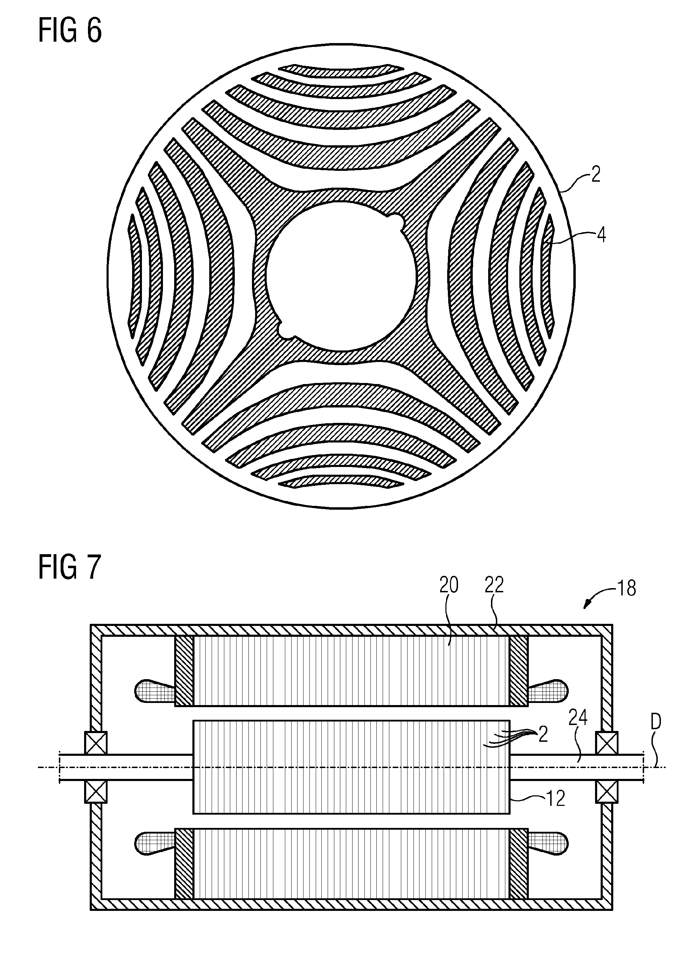

In FIG 1 ist ein Rotorblech 2 für einen erfindungsgemäßen, hier nicht näher gezeigten Rotor 12 eines Reluktanzmotors 18 dargestellt. Ein solcher Reluktanzmotor 18, der eine elektrische Maschine umfassend einen Rotor 12 und einen Stator 20 darstellt, ist in FIG 7 schematisch gezeigt. Der Reluktanzmotor 18 weist ein Gehäuse 22 auf, in dem der Rotor 12 auf einer Welle 24 drehbar gelagert ist. Die einzelne Rotorbleche 2 sind hintereinander auf der Welle 24 aufgesteckt und bilden dabei ein einheitliches Blechpaket. Im Betrieb dreht sich der Rotor 12 um die Achse D. Des Weiteren befindet sich im Inneren des Gehäuses 22 der Stator 20.

Das Rotorblech 2 gemäß FIG 1 weist mehrere magnetische Lamellen 4 aus einem Material mit einer hohen magnetischen Permeabilität auf, z.B. aus Eisen. Die Lamellen sind voneinander durch unmagnetische Bereiche getrennt, die im gezeigten Ausführungsbeispiel bogenartige Ausnehmungen 6 sind, welche insbesondere durch ein spannendes Trennverfahren wie z.B. Ausstanzen ausgebildet werden.

Das Rotorblech 2 zeichnet sich dadurch aus, dass im zusammengebauten Zustand des Rotors die Ausnehmungen 6 zum Umfang U des jeweiligen Rotorblechs 2 hin offen sind, so dass beide Enden 7 der Ausnehmungen 6 in den äußeren Umfang münden. Dabei ist kein für solche Rotorbleche üblicher Außenring oder Außensteg vorhanden. Dies wird fertigungstechnisch realisiert, indem die Bleche zunächst einen üblichen Außenring aufweisen und der Außenring in meinem nachfolgenden Bearbeitungsschritt z.B. durch Abdrehen entfernt wird. Zudem sind keine radialen Stege zwischen den Lamellen vorhanden, so dass die Ausnehmungen 6 von einem offenen Ende zum anderen, offenen Ende hin durchgehend sind.

Bei einem fehlenden Außenring sowie fehlenden radialen Stegen wird ein stabiler Verband dadurch erreicht, dass im Zusammenbauen des Rotors die übereinandergeschichteten Rotorbleche 2 zusammengepresst werden und/oder unter Druck ein flüssiger Werkstoff, z.B. flüssiger Kunststoff, eingespritzt wird. Beim Aushärten des Kunststoffs entsteht somit ein starrer Körper in dem die losen Lamellen 4 der einzelnen Rotorbleche 2 sich nicht verschieben können.

Der flüssige Kunststoff wird insbesondere über die gesamte Länge des Rotors gespritzt und verbindet somit alle Rotorbleche 2 miteinander.

Um die Verbindung zwischen den Lamellen und dem Kunststoff zu verstärken, wird zusätzlicher Formschluss in der Ebene des Rotorblechs 2 hergestellt, indem die Lamellen 4 um ihren Umfang Verbindungselemente z.B. nach Art von trapezförmigen Zähnen 8 zur Herstellung einer Schwalbenschwanz-Verbindung aufweisen. Dies ist in FIG 2 gezeigt. Komplementär zu den Zähnen 8 sind zudem trapezförmige Einkerbungen 10 um den Umfang der Lamellen 4 ausgebildet. Im zusammengebauten Zustand des Rotors füllt der Kunststoff die Hinterschneidungen der Zähne 8 oder der Einkerbungen 10 aus, so dass sich der Kunststoff und die Lamellen verzahnen und dadurch eine Schwalbenschwanz-Verbindung entsteht.

Eine weitere Möglichkeit zur Herstellung einer formschlüssigen Verbindung zwischen den Lamellen 4 und dem Kunststoff ist in FIG 3 gezeigt. Hierbei weisen die Lamellen 4 etwas mittig Bohrungen 11 auf. Bei mehreren übereinender gestapelten Rotorblechen 2 entstehen somit im Bereich der Bohrungen 11 Kanäle in Axialrichtung, welche mit dem Kunststoff ausgefüllt werden.

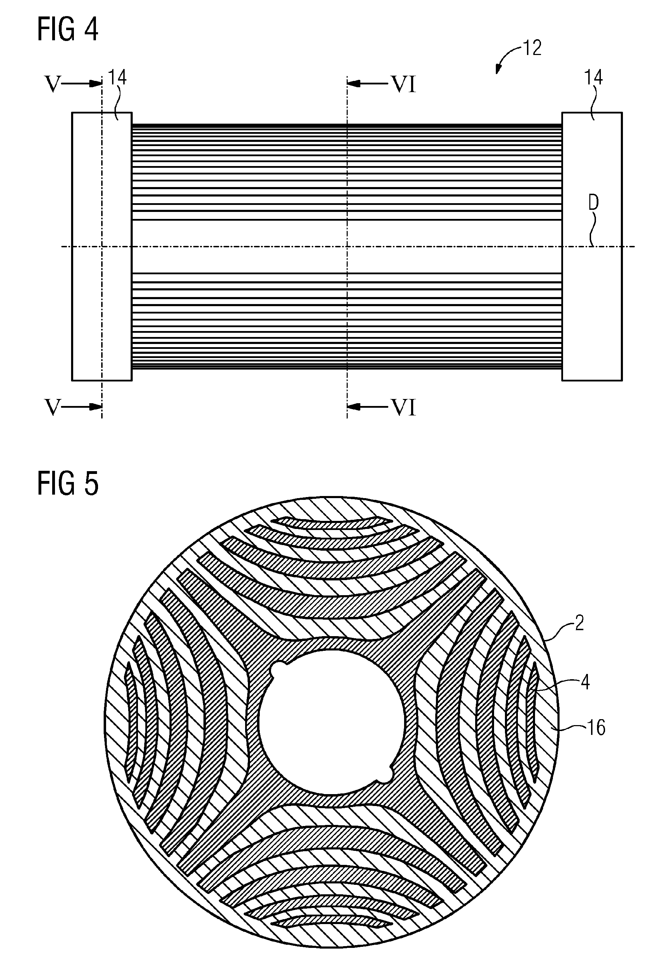

Ein sich entlang einer Drehachse D erstreckende Rotor 12 gemäß einer weiteren erfindungsgemäßen Ausführungsvariante ist in FIG 4 gezeigt. Bei dieser Ausführungsvariante bildet der Kunststoff zwei Endscheiben 14, welche die Rotorbleche 2 zusammenpressen. Wie in der Querschnittdarstellung in FIG 5 gezeigt, ist der Innenraum im Bereich der Endscheiben 14 mit einem Werkstoff 16, im gezeigten Ausführungsbeispiel mit Kunststoff, ausgefüllt (schraffierte Fläche). Aus FIG 6 ist ersichtlich, dass im Bereich des Rotors 12 außerhalb der Endscheiben 14 Hohlräume vorhanden sind, jedoch werden auch in diesem Bereich die Rotorbleche 2 und somit die einzelnen Lamellen 4 durch die Druckkraft der Endscheiben 14 sicher zusammengehalten. Die Endscheiben 14 sind insbesondere mit der Welle 24 des Rotors 12 (siehe FIG 7) fest verbunden. Denkbar ist auch, dass auf ein Ausfüllen der Ausnehmungen 6 mit Kunstsoff verzichtet wird, wenn die Endscheiben 14 das Blechpaket axial begrenzen und dabei die Rotorbleche 2 fest fixieren.

## Patentansprüche

1. Rotor (12) für einen Reluktanzmotor, umfassend mehrere entlang einer Drehachse (D) hintereinander gestapelte Rotorbleche (2), wobei
- jedes Rotorblech (2) mehrere magnetische Lamellen (4) aufweist, die voneinander durch unmagnetische Ausnehmungen (6) getrennt sind,
- die unmagnetischen Ausnehmungen (6) bogenartig ausgebildet sind und ihre beiden Enden (7) zu einem äußeren Umfang (U) des Rotorblechs (2) hin offen sind,
- die Ausnehmungen (6) zumindest eines Teils der Rotorbleche (2) mit einem festen Werkstoff (16) ausgefüllt sind,
**dadurch gekennzeichnet , dass** im zusammengebauten Zustand des Rotors (12) die gestapelten Rotorbleche (2) lediglich in Richtung der Drehachse (D) miteinander verbunden sind.

2. Rotor (12) nach Anspruch 1, **dadurch gekennzeichnet , dass** die Ausnehmungen (6) über ihre Länge zwischen den beiden in den Umfang (U) des Rotorblechs (2) mündenden Enden (7) durchgehend sind.

3. Rotor (12) nach Anspruch 1 oder 2, **dadurch** g e - **kennzeichnet** , dass die magnetischen Lamellen (4) Verbindungselemente (8, 10, 11) aufweisen, über welche sie in einer formschlüssigen Verbindung mit dem Werkstoff (16) stehen.

4. Rotor (12) nach Anspruch 3, **dadurch gekenn** - **zeichnet** , dass die Verbindungselemente (8, 10) um den Umfang der magnetischen Lamellen (4) angeordnet sind.

5. Rotor (12) nach Anspruch 4, **dadurch gekennzeichnet , dass** die Verbindungselemente (8, 10) als trapezförmige Zähne (8) und/oder trapezförmige Einkerbungen (10) zur Herstellung einer Schwalbenschwanz-Verbindung ausgebildet sind.

6. Rotor (12) nach einem der Ansprüche 3 bis 5, d a - **durch gekennzeichnet** , dass die Verbindungselemente als Bohrungen (11) in den Lamellen (4) ausgebildet sind, die im zusammengebauten Zustand mit dem Werkstoff (16) ausgefüllt sind.

7. Rotor (12) nach einem der vorhergehenden Ansprüche, d a - **durch gekennzeichnet** , dass Endscheiben vorgesehen sind, welche die Rotorbleche (2) zusammenhalten.

8. Verfahren zum Herstellen eines Rotors (2) für einen Reluktanzmotor, wobei
- mehrere Rotorbleche (2), umfassend innerhalb eines Außenrings angeordnete magnetische Lamellen (4), die voneinander durch unmagnetische, bogenartige Ausnehmungen (6) getrennt sind, gefertigt werden,
- die Rotorbleche (2) entlang einer Drehachse (D) hintereinander gestapelt werden,
- die Außenringe der einzelnen Rotorbleche (2) entfernt werden und hierdurch beide Enden (7) der bogenartigen Ausnehmungen in den äußeren Umfang (U) der Rotorbleche (2) münden,
- die Ausnehmungen (6) zumindest eines Teils der Rotorbleche (2) mit einem flüssigen Werkstoff (16) ausgefüllt werden, der verfestigt wird.

9. Verfahren nach Anspruch 8, wobei die die Ausnehmungen (6) über ihre Länge zwischen den beiden in den Umfang (U) des jeweiligen Rotorblechs (2) mündenden Enden (7) durchgehend ausgebildet werden.

10. Verfahren nach Anspruch 8 oder 9, wobei über Verbindungselemente, die an den magnetischen Lamellen (4) ausgebildet sind, eine formschlüssige Verbindung mit dem verfestigten Werkstoff (16) hergestellt wird.

11. Verfahren nach Anspruch 10, wobei ein Formschluss mit dem Werkstoff (16) in radialer Richtung hergestellt wird, indem die Verbindungselemente um den Umfang der magnetischen Lamellen (4) vorgesehen sind.

12. Verfahren nach Anspruch 10 oder 11, wobei zwischen den Verbindungselementen und dem Werkstoff (16) eine Schwalbenschwanz-Verbindung hergestellt wird.

13. Verfahren nach einem der Ansprüche 10 bis 12, wobei die Verbindungselemente als Bohrungen (11) in den Lamellen (4) ausgebildet sind, welche mit dem Werkstoff (16) ausgefüllt werden.

14. Verfahren nach einem der Ansprüche 8 bis 13, wobei an beiden axialen Enden des Rotors (12) Endscheiben (14) angebracht werden, welche die Rotorbleche (2) zusammenhalten.

15. Elektrische Maschine, insbesondere ein Reluktanzmotor (18), mit einem Stator (20) und einem Rotor (12) nach einem der Ansprüche 1 bis 7.
